**Europäisches Patentamt**

**European Patent Office**

**Office européen des brevets**

(11) Veröffentlichungsnummer: **0 305 369 B1**

## EUROPÄISCHE PATENTSCHRIFT

(45) Veröffentlichungstag der Patentschrift: **02.03.94**

(51) Int. Cl.5: **G02B 23/16**

(21) Anmeldenummer: **87902385.1**

(22) Anmeldetag: **09.04.87**

(86) Internationale Anmeldenummer:
**PCT/DE87/00159**

(87) Internationale Veröffentlichungsnummer:
**WO 88/06743 (07.09.88 88/20)**

(54) **SPIEGELTELESKOP.**

(30) Priorität: **06.03.87 DE 3707642**

(43) Veröffentlichungstag der Anmeldung:
**08.03.89 Patentblatt 89/10**

(45) Bekanntmachung des Hinweises auf die
Patenterteilung:
**02.03.94 Patentblatt 94/09**

(84) Benannte Vertragsstaaten:
**AT BE CH DE FR GB IT LI LU NL SE**

(56) Entgegenhaltungen:
**GB-A- 1 188 578**
**US-A- 3 503 664**
**US-A- 3 791 713**
**US-A- 3 842 509**

**Journal of Scientific Instruments, vol. 3, no. 3, March 1970, S.C.B. Gascoigne: "Optical telescopes", pp 165-172**

**Journal of the Optical Society of America, vol. 72, no. 1, January 1982, Optical Society of America, (New York, US), A.B. Meinel:**

**"Cost relationships for non-conventional telescope structural configurations", pp 14-20**

(73) Patentinhaber: **Hügenell, Hermann**
**Maxdorfer Strasse 47**
**D-67245 Lambsheim(DE)**

Patentinhaber: **Angstenberger, Karl Friedrich, Dipl.-Ing.**
**Albrecht-Dürer-Ring 29 a**
**D-67227 Frankenthal(DE)**

(72) Erfinder: **HÜGENELL, Hermann**
**Maxdorfer Strasse 47**
**D-6715 Lambsheim(DE)**

(74) Vertreter: **Lieck, Hans-Peter, Dipl.-Ing. et al**
**Feddersen Laule Scherzberg&Ohle Hansen Ewerwahn**
**Widenmayerstrasse 36**
**D-80538 München (DE)**

EP 0 305 369 B1

## Beschreibung

Die Erfindung bezieht sich auf ein Spiegelteleskop gemäß dem Oberbegriff des Anspruches 1.

Ein derartiges Spiegelteleskop ist aus der US-A-3,503,664 bekannt. Hierbei ist ein Kugelgehäuse vorgesehen, das mittels einer hydrodynamischen Gleitlagerung in einem Rahmen um eine horizontale Achse schwenkbar gelagert ist. Weiterhin ist vorgesehen, daß der Rahmen um eine vertikale Achse in einem Basisgestell drehbar gelagert ist.

Die GB-A-1 188 578 sieht bei einem Spiegelteleskop ein Kugelgehäuse mit einem Kalottenrahmen vor, der um eine vertikale Achse in einem Basisgestell drehbar gelagert ist. Hierbei ist für das Kugelgehäuse eine hydrodynamische Gleitlagerung vorgesehen. Das Gehäuse ist um zwei weitere Achsen drehbar gelagert. Somit kann das Gehäuse um eine horizontale Achse geschwenkt werden. In dem Kugelgehäuse kann ein Tubus angeordnet sein.

Aus der US-PS 3,791,713 ist ein weiteres Spiegelteleskop bekannt, bei dem das Kugelgehäuse innerhalb des Kalottenrahmens auf einem Luftpolster gelagert und mittels besonderer Antriebe um die Polarachse und die Deklinationsachse drehbar ist.

Bei diesen bekannten Spiegelteleskopen wird die aufwendige Art der Antriebe und Lagerungen als nachteilig betrachtet. Es hat sich gezeigt, daß sich die bekannten Konstruktionen für größere Spiegelteleskopanlagen technisch nicht realisieren lassen. Als weiterer Nachteil wird gesehen, daß der Tubus bei unterschiedlichen Ausrichtungen von außen nicht zugänglich ist.

Ausgehend hiervon liegt der Erfindung die Aufgabe zugrunde, ein Spiegelteleskop der gattungsgemäßen Art zu schaffen, dessen Antriebe für die notwendigen Drehbewegungen des Kugelgehäuses einfach ausgebildet sind und dessen Kugelgehäuse in jeder Drehlage durch ein und denselben Eingang begehbar und ständig zugänglich ist.

Zur Lösung dieser Aufgabe wird bei einem Spiegelteleskop gemäß dem Oberbegriff des Anspruches 1 vorgeschlagen, daß im Kugelgehäuse ein Tubus angeordnet ist, daß das Kugelgehäuse Achsschenkel aufweist, die in Lageraugen des Kalottenrahmens gelagert sind und die zur Drehung des Kugelgehäuses um eine horizontale Achse dienen, daß die Achsschenkel aus begehbaren Laufröhren gebildet sind, daß die Drehung des Kugelgehäuses um die horizontale Achse über die Laufröhren erfolgt und daß das Kugelgehäuse und der Kalottenrahmen mittels der hydrodynamischen Gleitlagerung um eine vertikale Achse drehbar in einem Basisgestell gelagert sind.

Diese Ausbildung des Spiegelteleskopes ermöglicht einen ständigen Zugang vom Kalottenrahmen zum Kugelgehäuse durch die im Kalottenrahmen angeordneten Lageraugen für das Kugelgehäuse. Hierbei erfolgt der Zugang über die begehbaren Laufröhren, die gleichzeitig als Achsschenkel für die Lagerung des Kugelgehäuses dienen.

Das Kugelgehäuse und der Kalottenrahmen sind mittels der hydrodynamischen Gleitlagerung um eine vertikale Achse drehbar in dem Basisgestell gelagert. Somit schweben das Kugelgehäuse und der Kalottenrahmen beispielsweise auf einem hauchdünnen Ölfilm und sind leicht um ihre horizontale Achse drehbar.

Durch die erfindungsgemäße Ausbildung des Spiegelteleskopes bleibt auch der Primärspiegel selbst unbelastet von Massenkräften der Kugelkonstruktion. Alle Massen sind um den Primärspiegel herum abgestützt, so daß auf diesen keine Zug- und Druckkräfte einwirken. Auch sind beide Lagerungen des Kugelgehäuses in jeder Drehlage gleich stark belastet. Somit besteht in den Lagerungen des Kugelgehäuses in jeder Drehlage Lastfreiheit, da die Last im Kalottenrahmen aufgefangen wird. Die hydrostatische Lagerung des Kugelgehäuses hat etwa die Flächenabmessungen des Primärspiegels und besteht aus in diagonalen Reihen angeordneten hydrostatischen Stützelementen. Das Kugelgehäuse kann um ca. 150° von Horizont zu Horizont gedreht werden.

Vorteilhafte Ausgestaltungen der Erfindung ergeben sich aus den Unteransprüchen.

Mit einer Ausgestaltung gemäß Anspruch 2 wird erreicht, daß bei jeder Drehlage des Kugelgehäuses ein ständig zugänglicher Zugang zum Kugelgehäuse sichergestellt ist.

Bei einer vorteilhaften Weiterbildung gemäß Anspruch 3 wird vorgesehen, daß die innerhalb des Kugelgehäuses ausgebildeten Lifte mit kugelförmigen Liftinnenwandungen versehen sind, die innerhalb der Liftaußenwandung derart gelagert sind, daß die Liftstandplattformen in jeder Drehlage des Kugelgehäuses in der horizontalen Ebene der Laufplattformen der Laufröhren befindlich sind. Somit ist eine Benutzung der Lifte innerhalb des Kugelgehäuses in jeder Drehlage möglich.

Vorteilhaft besteht das Kugelgehäuse zur Gewichtserleichterung aus Kohlefasern. Aus dem gleichen Material können auch die tragenden Teile des Tubus ausgebildet sein. Für die Konstruktion des Kalottenrahmens kann auch eine Stahlkonstruktion vorgesehen sein.

Eine vorteilhafte Weiterbildung der Erfindung wird in Anspruch 6 vorgeschlagen. Hierbei wird der Primärspiegel aus einzelnen, einstellbar gelagerten Spiegelsegmenten gebildet. Konzentrisch zu diesem ist ein Tubus angeordnet, der mit Beobachtungskabinen versehen ist. Der Tubus wird an einem Halterungsgestänge gehalten.

Ein Spiegelteleskop dieser Art ist als Mauna-Kea-Spiegelteleskop mit 10m Spiegeldurchmesser bekannt, welches das derzeit größte, noch in der Planung befindliche Spiegelteleskop der Welt werden soll (Sterne und Weltraum 1984, 8 bis 9, Seite 112). Bei diesem Spiegelteleskop ist der Primärspiegel aus 36 hexagonalen Spiegelsegmenten gebildet, die bienenwabenförmig die Spiegelfläche bilden, wobei in der Mitte ein Spiegelsegment zur Beobachtung im Cassegrain-Fokus ausgespart ist. Die Herstellung der einzelnen hexagonalen Spiegelsegmente selbst ist äußerst problematisch. Es handelt sich bei diesen um achsferne Ausschnitte eines Paraboloids, die sechseckig zugeschnitten werden müssen. Bei der Herstellung wird von einem kreisförmigen Rohling ausgegangen, der durch am Rand ansetzende, genau definierte Scher- und Biegekräfte verformt wird. In den verformten Rohling wird eine Kugelform eingeschliffen. Danach werden die aufgebrachten Kräfte wieder entfernt. Sofern die Kräfte richtig gewählt waren, nimmt das Spiegelsegment bei der Entlastung die gewünschte Form des Paraboloid-Ausschnittes an. Es hat sich jedoch gezeigt, daß beim Schneiden in die hexagonale Form Verwerfungen auftreten, so daß die Herstellung der einzelnen Spiegelsegmente äußerst aufwendig ist. Darüber hinaus muß die Lage der einzelnen hexagonalen Spiegelsegmente je nach Stellung des Teleskops, Windlast und Temperaturschwankungen nachgeregelt werden. Dazu sind die Unterstützungspunkte jedes Spiegelsegmentes mit drei Lagereglern verbunden, die das Spiegelsegment nachfokussieren und in zwei Neigungsrichtungen verstellen können. An den rückseitigen Kanten befinden sich Sensoren, welche die Verschiebung benachbarter Spiegelsegmente gegeneinander messen. Zusammen mit drei Neigungssensoren, die die Gesamtkrümmung des Spiegelsegments messen, liefern diese die Informationen, die in einem Rechnersystem verarbeitet werden, das die insgesamt 108 Lageregler steuert. Bei insgesamt 168 verschiedenen Sensoren ist die Redundanz so groß, daß der Ausfall einzelner Sensoren verkraftet werden kann. Allerdings bleiben bei dieser Anordnung die Vorderseiten der Spiegelsegmente von störenden Kontrollsystemen frei, es muß nur gelegentlich mit Hilfe eines Sternbilds nachjustiert werden, so daß auch Infrarotbeobachtungen am Tage möglich sein werden. Sensoren und Lageregler müssen auf mindestens 50 nm genau arbeiten.

Es sind darüber hinaus einstückige Primärspiegel für Spiegelteleskope bekannt, so z.B. das 3,5 Meter-Teleskop für das Max-Planck-Institut für Astronomie (Zeiss Informationen Heft 94, 1982, Seiten 4 ff). Hierbei besteht der Spiegelkörper aus Glaskeramik (ZERODUR) mit geringem Temperaturausdehnungskoeffizienten. Die Spiegelfläche ist als Rotationshyperboloid höerer Ordnung geschliffen und poliert. Die Standardabweichung beträgt maximal 30 nm, die Messung erfolgt mit einem Laser-Inferometer. Die Lagerung des Spiegelkörpers erfolgt über eine 18-Punkte-Lagerung.

An derartige Spiegelteloskope werden folgende Anforderungen gestellt:

1. Es soll soviel Strahlungsenergie wie möglich eingefangen werden, diese ist der sammelnden Fläche des Primärspiegels proportional. Folglich soll der Durchmesser des Primärspiegels so groß wie möglich sein. Der Durchmesser wird jedoch durch technische und ökonomische Bedingungen begrenzt.

2. Die von einem Stern aufgesammelte Strahlung soll möglichst scharf auf einem Punkte in der Fokalebene des Spiegelteleskopes konzentriert sein. Die Qualität der optischen Abbildung soll möglichst gut sein. Nachteile bestehen bei erdgebundenen Spiegelteleskopen durch den Einfluß der Erdatmospähre z.B. Turbulenz der Luft. Spiegelteleskope auf Satellitenbahnen haben diese Nachteile allerdings nicht.

3. Der abgebildete Stern soll möglichst lange ohne örtliche Schwankungen auf der Bildebene gehalten werden.

Nachteilig bei den einstückigen Primärspiegeln für Spiegelteleskope ist, daß dies herstellungsbedingt im Durchmesser beschränkt sind. Das größte Spiegelteleskop mit einem einstückigen Primärspiegel ist das Hale-Teleskop mit einem Spiegeldurchmesser von 5 m. Das einzig vorbekannte Spiegelteleskop mit einem Primärspiegel aus einzelnen Spiegelsegmenten hat den Nachteil, daß die Herstellung der einzelnen Spiegelsegmente äußerst aufwendig ist, da jedes Spiegelsegment für sich als Ausschnitt eines Paraboloids geschliffen werden muß. Ferner müssen an den Berührungslinien der einzelnen Segmente die Sensoren eine exakte Justierung gewährleisten. Der dabei betriebene Aufwand an zusätzlichen technischen Maßnamen ist im Verhältnis zur Gesamtwirkung des Teleskops äußerst hoch. Außerdom ist eine äußerst komplexe Segmentlagerung erforderlich.

Den beiden Arten von Spiegelteleskopen gemeinsam ist der Nachteil, daß die sich innerhalb des Tubus befindlichen Beobachtungskabinen sich mit ihrem ganzen Durchmessser die Spiegelfläche des Primärspiegels abschatten. Gleichzeitig verursachen die Halterungsgestänge zusätzliche Abschattungsflächen, die sich teilweise radial über den Primärspiegel erstrecken. Diese Abschattungsflächen sind bei allen Fokussierungsarten vorhanden und unvermeidlich. Sie bedeuten, daß mit hohem Kostenaufwand hergestellte Spiegelflächen des Primärspiegels unwirksam sind, da diese nicht zur Sammlung der Strahlungsenergie beitragen können.

Um diese Nachteile zu vermeiden, wird weiterhin in Anspruch 6 vorgeschlagen, daß die Spiegelsegmente aus kreisscheibenförmigen Spiegelkörpern gebildet und auf konzentrisch zum Tubus verlaufenden Kreisbahnen im Abstand voneinander derart gelagert sind, daß zwischen den Spiegelkörpern Freiflächen für die Lagerungen der Spiegelkörper und für das Halterungsgestänge bzw. für dessen Abschattungsflächen gebildet sind. Beim erfindungsgemäßen Spiegelteleskop, auch Zentralachsenspiegler genannt, befinden sich die Halterungsgestänge außerhalb des Strahlenganges und schatten somit keine kostbare Spiegelfläche ab, während die durch die Beobachtungskabinen verursachte Zentralabschattung zur Umlenkung des einfallenden Lichtes vielseitig ausgenutzt wird. Die einzelnen Spiegelsegmente sind beim Zentralachsenspiegler Rundspiegel, bei welchen die bei den hexagonalen Spiegelsegmenten gemäß dem Stand der Technik auftretenden schwierigen Zug- und Druckverhältnisse, die sich je nach schrägstellung des Tubus einstellen, vermieden sind. Bei kreisrunden Spiegelkörpern wird die Lagerung seit langem technisch beherrscht.

Die Erfindung basiert somit auf der Kombination der Verwendung von technisch mit bekannten Maßnahmen einfach und kostengünstig herstellbaren Spiegelkörpern als Rundspiegeln und deren derartiger Anordnung, daß zwischen den einzelnen Spiegelkörpern Freiflächen für die Lagerung der Spiegelkörper einerseits und für das Halterungsgestänge bzw. für dessen Abschattungsflächen andererseits gebildet sind. Somit kann bei der Herstellung des erfindungsgemäßen Spiegelteleskopes einerseits auf die bekannte und beherrschte Technologie der Herstellung eines mit einer einstellbaren Lagerung versehenen einstückigen Spiegelkörpers zurückgegriffen werden. Gleichzeitig wird erfindungsgemäß vorgeschlagen, diese einstückigen runden Spiegelkörper in Abständen voneinander auf Kreisbahnen derart anzuordnen, daß die dazwischenliegenden Freiräume als Freiflächen für die Lagerung des Spiegelkörpers einerseits und für das Halterungsgestänge bzw. für dessen Abschattungsflächen verwendet werden können.

Zur Ermittlung des Tubusdurchmessers, welcher gleichzeitig Größtdurchmesser des Primärspiegels ist, wird von dem gewünschten Durchmesser eines einstückigen bzw. einflächigen Spiegels ausgegangen. Wird beispielsweise ein effektiver Durchmesser des Primärspiegels von 20 m gewünscht, welcher auf 18 runde Spiegelkörper verteilt werden muß, so ergibt sich der Radius eines einzelnen runden Spiegelkörpers aus folgender Rechnung:

$18 \, r^2 = 100$

$r = 2,357 \text{ m}$

Jeder der 18 Spiegelkörper hat somit einen Durchmesser von 4,714 m. Der Gesamtdurchmesser des Primärspiegels aus 18 runden Spiegelkörpern beträgt 26,946 m. Damit sind die Freiräume zwischen den 18 runden Spiegelkörpern wie die entsprechenden Abschattungsflächen eines hypothetischen Monospiegels mit 26,946 m Durchmesser zu behandeln.

Erfindungsgemäß wird ferner vorgeschlagen, daß die Oberflächen aller Spiegelkörper zur Ausbildung der gewünschten Spiegeloberfläche des Primärspiegels, insbesondere Paraboloid, gemeinsam geschliffen werden; dies kann analog zum Schleifen und Polieren eines einstückigen Primärspiegels gemäß dem Stand der Technik erfolgen.

Erfindungsgemäß wird weiter vorgeschlagen, daß das eingangsseitige Halterungsgestänge des Tubus aus einem Lochblech mit Öffnungen gebildet ist, deren Anordnung und Durchmesser der Anordnung und dem Durchmesser der Spiegelkörper des Primärspiegels entspricht.

Die Erfindung umfaßt ferner noch die Ausbildung eines speziellen, sich außerhalb des Strahlenganges des Zentralachsenspieglers befindlichen Halterungsgestänges mit frei und längs der Zentralachse beweglichen Beobachtungskabinen. Erfindungsgemäß sind beim Zentralachsenspiegler drei Beobachtungskabinen vorgesehen, welche mit diversen Umlenkspiegeln versehen sind, je nach dem gewünschten Fokus. Alle Beobachtungskabinen sind frei und längs der Zentralachse beweglich.

Die Erfindung ist nachfolgend anhand von in den Zeichnungen dargestellten Ausführungsbeispielen des Spiegelteleskopes näher erläutert. Es zeigen:

| | |
|---|---|
| Fig. 1 | eine perspektivische Darstellung der einen Ausführungsform, |
| Fig. 2 | eine teilweise geschnitten dargestellte Vorderansicht, |
| Fig. 3 | einen partiellen Querschnitt, |
| Fig. 4 | eine Detaildarstellung der innerhalb der Achse des Kugelgehäuses angeordneten Laufröhre mit an diesen angrenzenden Lift, |
| Fig. 5 | eine Perspektivdarstellung der Laufröhre mit darin befindlicher Laufplattform, |
| Fig. 6 | eine Perspetivdarstellung der Laufplattform, |
| Fig. 7 | eine Draufsicht auf den Primärspiegel, |
| Fig. 8 | einen Prinzipschnitt längs der Zentralachse des Primärspiegels, |
| Fig. 9 | eine Perspektivdarstellung des Primärspiegels, |
| Fig. 10 | eine Prinzipdarstellung des Schleifverfahrens des Primärspiegels, |

Fig. 11 die Darstellung eines einzelnen Spiegelkörpers,

Fig. 12 Funktionsdarstellungen,

Fig. 13 bis 16 Prinzipdarstellungen der Strahlengänge bei verschiedenen Beobachtungsarten,

Fig. 17 eine Perspektivdarstellung des Halterungsgestänges,

Fig. 18 eine Teildarstellung hierzu,

Fig. 19 einen Schnitt entlang der Zentralachse durch das Halterungsgestänge,

Fig. 20 einen Längsschnitt durch ein Führungsrohr,

Fig. 21 eine Perpektivdarstellung des Tubusrahmens,

Fig. 22 der fertig montierte Tubus,

Fig. 23 einen Axialschnitt durch eine Coudé- Kabine und

Fig. 24 eine teilweise geschnittene Perpektivdarstellung der zweiten Ausführungsform.

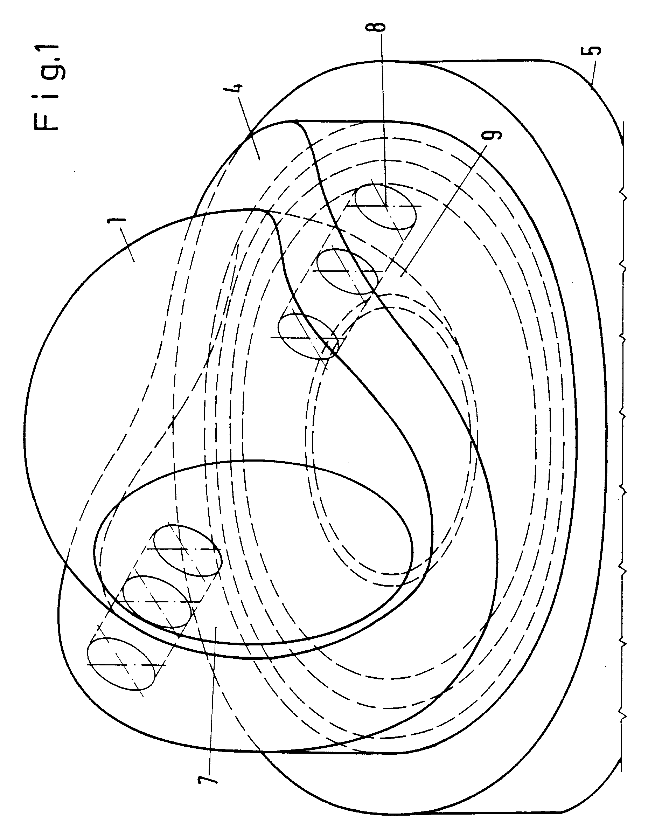

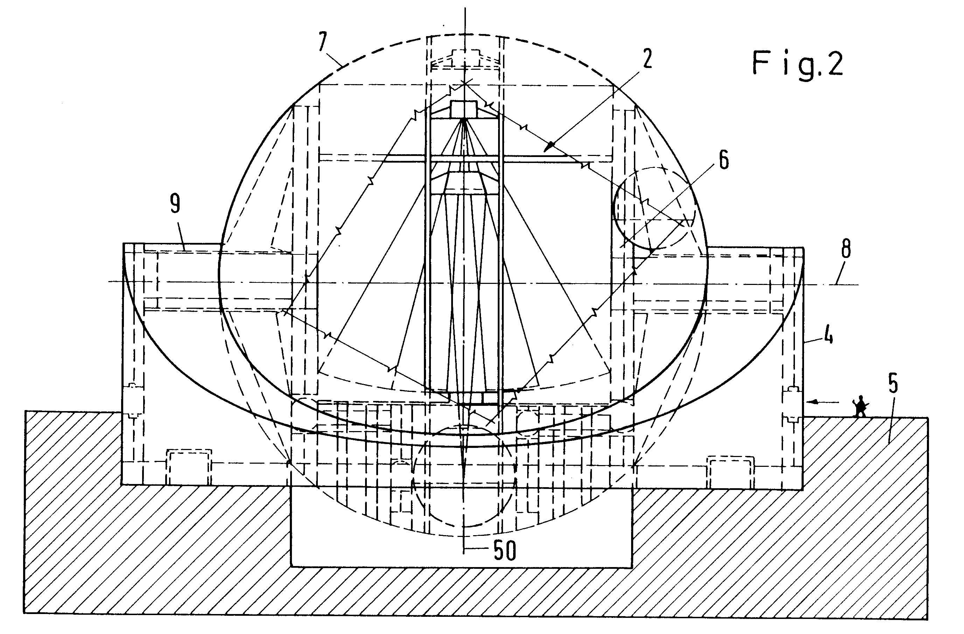

Das Spiegelteleskop besteht gemäß den Fig. 1 und 2 aus einem Kugelgehäuse 1, einem in diesem gelagerten Tubus 2 mit dem Primärspiegel 3, aus einem Kalottenrahmen 4 zur Lagerung des Kugelgehäuses 1 und aus einem Basisgestell 5 zur Lagerung des Kalottenrahmens 4. Der Tubus 2 mit dem Primärspiegel 3 wird genauestens im zweiten Teil dieser Beschreibung erläutert werden.

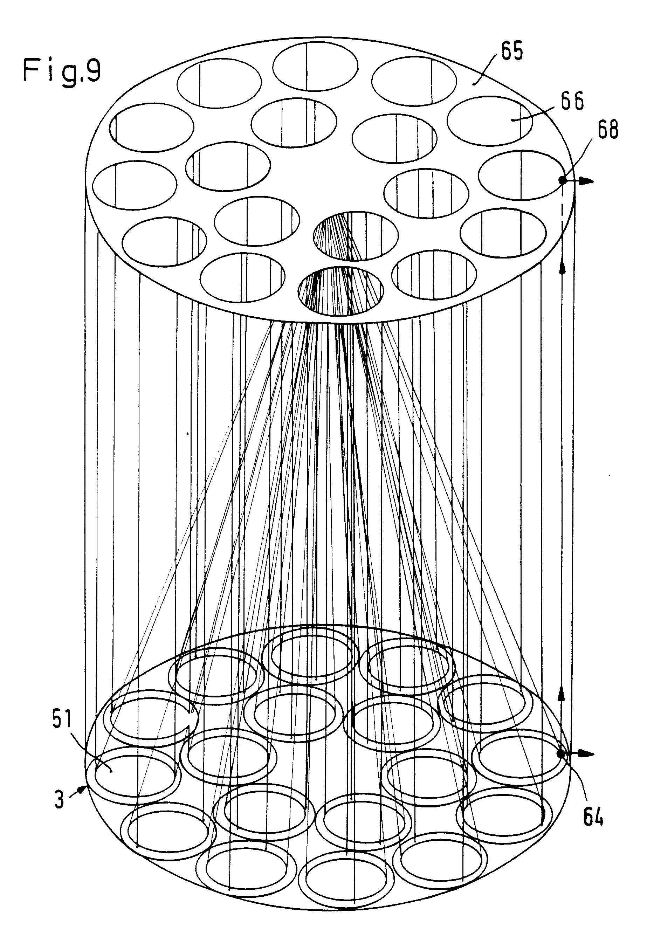

Das Kugelgehäuse 1 hat derartige Abmessungen, daß der Tubus 2 mit seinem äußeren Halterungsgestänge 6 sich quer durch den gesamten Durchmesser des Kugelgehäuses 1 erstreckt, wobei gemäß Fig. 2 der im Durchmesser relativ große Primärspiegel 3 sich weit unterhalb des Kugelmittelpunktes befindet. In der dem Primärspiegel 3 gegenüberliegenden Wandung des Kugelgehäuses 1 befindet sich das sogenannte Auge 7 des Spiegelteleskops, das aus einem Lochblech 65 mit kreisförmigen Öffnungen 66 besteht, welche genau oberhalb der einzelnen Spiegelsegmente 51 des Primärspiegels 3 angeordnet sind. ( Fig. 9 )

Das Kugelgehäuse 1 ist um eine horizontale Achse 8 drehbar in Lageraugen 9 des Kalottenrahmens 4 gelagert. Die horizontal verlaufende Achse 8 des Kugelgehäuses 1 wird aus begehbaren, am Kugelgehäuse 1 fest angebrachten Laufröhren 10 gebildet, in denen am Kalottenrahmen 4 fest angebrachte, in den Laufröhren gleitbare Laufplatten 11 angeordnet sind, wie es später noch näher beschrieben werden wird.

Um die in nicht näher dargestellten Gleit- oder Wälzlagerungen in den Lageraugen 9 des Kalottenrahmens 4 gelagerten Laufröhren 10 herum erstrecken sich Antriebselemente 12 in Form von Zahnrädergetrieben, Keilriemen- oder Zahnriemengetrieben od. dgl. Diese dienen zur Drehung des Kugelgehäuses 1 um die horizontale Achse 8 und damit zur Ausrichtung des Auges 7 des Spiegelteleskops.

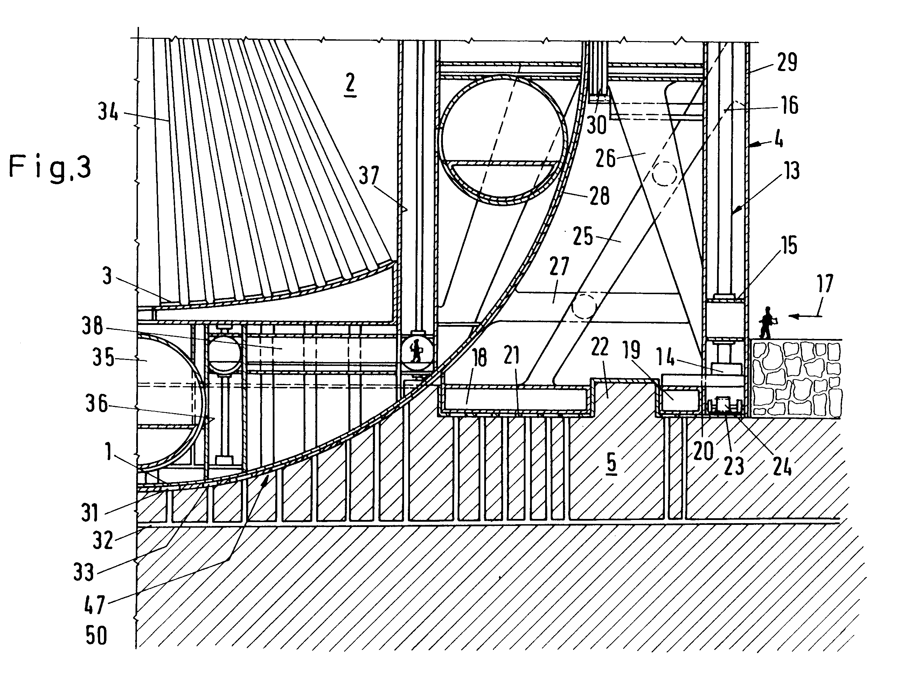

Die Fig. 3 zeigt einen partiellen vertikalen Querschnitt durch das Kugelgehäuse 1, den Kalottenrahmen 4 und das Basisgestell 5. Dieses weist auf der Außenseite einen Lift 13 mit Liftmotor 14, Liftkabine 15 und Liftantrieben 16 auf. Dieser Lift 13 führt in nicht näher dargestellter Weise innerhalb des Kalottenrahmens 4 zur Laufröhre 10 mit Laufplatte 11 innerhalb der Achse 8 des Kugelgehäuses. Über einen auf der Oberseite des Basisgestelles 5 angeordneten Zugang 17 ist der Lift 13 unabhängig von der Drehstellung des Kalottenrahmens 4 um seine vertikale Achse und unabhängig von der Drehstellung des Kugelgehäuses 1 um seine horizontale Achse frei zugänglich.

Der Kalottenrahmen 4 ist vertikal mittels zweier Führungsringe 18,19 in entsprechenden Führungsnuten 20,21 mittels hydrostatischer Gleitlagerungen gelagert, welche innerhalb des Basisgestelles 5 angeordnet sind. Die beiden Führungnuten 20, 21 sind von einem ringförmigen Führungssockel 22 radial getrennt, wobei das gesamte Basisgestell 5 zusammen mit dem Führungsockel 22 zweckmäßigerweise aus Stahlbeton gebildet ist. Radial außerhalb der Führungsnut 20 befindet sich eine kreisförmige verzahnte Laufschiene 23, in die ein Zahnrad - antrieb 24 für eine 360°-Drehbarkeit des Kalottenrahmens 4 um seine vertikale Achse eingreift.

Der gesamte Kalottenrahmen 4 besteht aus einer Stahlkonstruktion, von denen einige Stützen 25, 26, 27 in Fig. 3 dargestellt sind, welche sich zwischen den Führungsringen 18,19, der Kalottenrahmeninnenwand 28 und der Kalottenrahmenaußenwand 29 erstrecken. Die Stützen tragen auch Antriebselemente 30 für die Antriebselemente 12 zur Drehung des Kugelgehäuses 1 um seine horizontale Achse 8.

Teilweise innerhalb des Kalottenrahmens 4 und teilweise innerhalb des Basisgestells 5 ist eine Kugelkalotte 47 zur Aufnahme des Kugelgehäuses 1 ausgebildet. Dieses wird über hydrostatische Stützlager 31 abgestützt, deren Druckkanäle 32 und Drucktaschen 33 in Fig. 3 dargestellt sind. Das Kugelgehäuse 1 ist somit im Kalottenrahmen 4 mittels hydrostatischer Gleitlagerungen(31 bis 33) gelagert. Diese nehmen die Massenkräfte des Kugelgehäuses 1 auf, so daß die Achsen 8 des Kugelgehäuses 1 nahezu vollständig belastungsfrei arbeiten können. Die notwendigen Einrichtungen zur Druckerzeugung sind nicht näher dargestellt.

Innerhalb des Kugelgehäuses 1 ist der Primärspiegel 3 mit seinem Strahlengang 34 dargestellt. Zentrisch unterhalb des Primärspiegels 3 befindet sich eine Beobachtungskabine 35 für den Coudé-Focus. Diese ist über einen Lift 36 zugänglich.

Außerhalb des Umfangs des Primärspiegels 3 befindet sich ein weiterer Lift 37, der innerhalb des Kugelgehäuses 1 zur Laufröhre 10 in der Achse 8 des Kugelgehäuses 1 führt. Beide Lifte 36,37 sind durch einen Laufgang 38 miteinander verbunden, oberhalb dessen sich die Arbeitsplattform für den Primärspiegel 3 befindet.

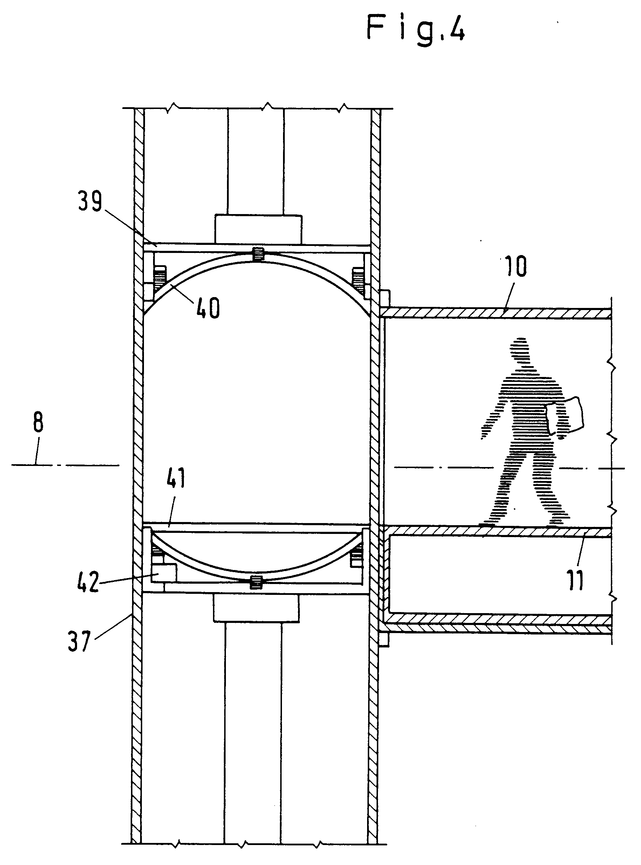

Wie es die Fig. 4 zeigt,weist jede Liftkabine 39 der Lifte 36 und 37 eine kugelförmig ausgebildete Liftinnenwandung 40 auf, welche jeweils mit einer Standplattform 41 versehen ist. Ferner sind Antriebe 42 zur Drehung der kugelförmigen Liftinnenwandung 40 mit der Standplattform 41 innerhalb der Liftkabine 39 vorgesehen. Diese Antriebe 42 sind mit den Antriebselementen 12 für die Drehbewegung des Kugelgehäuses 1 um seine Achse 8 derart verbunden, daß bei einer Drehbewegung des Kugelgehäuses 1 in Uhrzeigerrichtung die kugelförmigen Liftinnenwandungen 40 einer entsprechenden Drehung entgegen der Uhrzeigerrichtung unterworfen werden, so daß die Standplattformen 41 in jeder Drehlage des Kugelgehäuses 1 in einer horizontalen Ebene befindlich sind. In gleicher Weise wird auch die Laufplattform innerhalb des Laufganges 38 zwischen den Liften 36, 37 mitgedreht, welche sich innerhalb einer Laufröhre befindet. Da die in Fig. 4 dargestellte Laufplattform 11 innerhalb der Laufröhre 10 fest mit dem Kalottenrahmen 4 verbunden ist und sich die Laufröhre 10 zusammen mit dem Kugelgehäuse 1 dreht, stehen die Laufplattform 11 innerhalb der Laufröhre 10 und die Standplattform 41 innerhalb der Liftkabine 39 immer in horizontalen Ebenen, so daß in jeder Neigungslage des Kugelgehäuses 1 eine Benutzung der Lifteinrichtungen möglich ist.

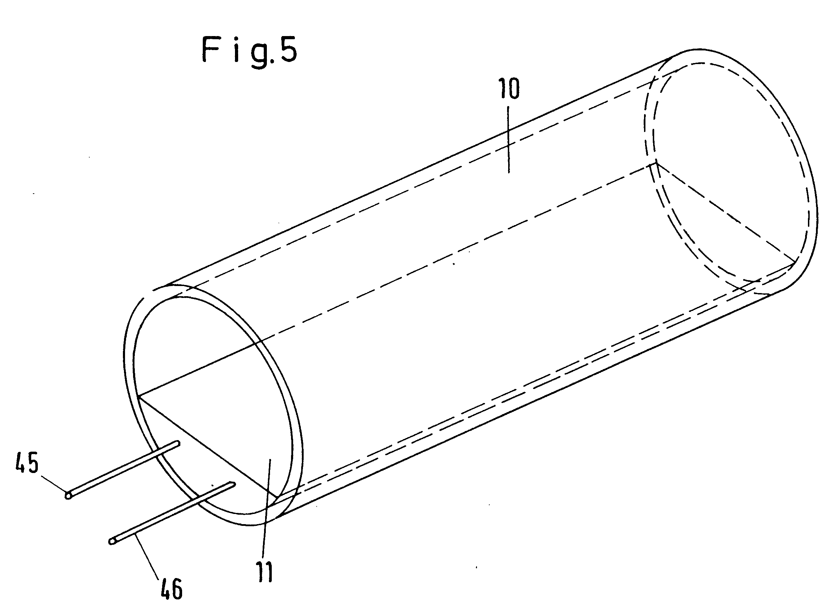

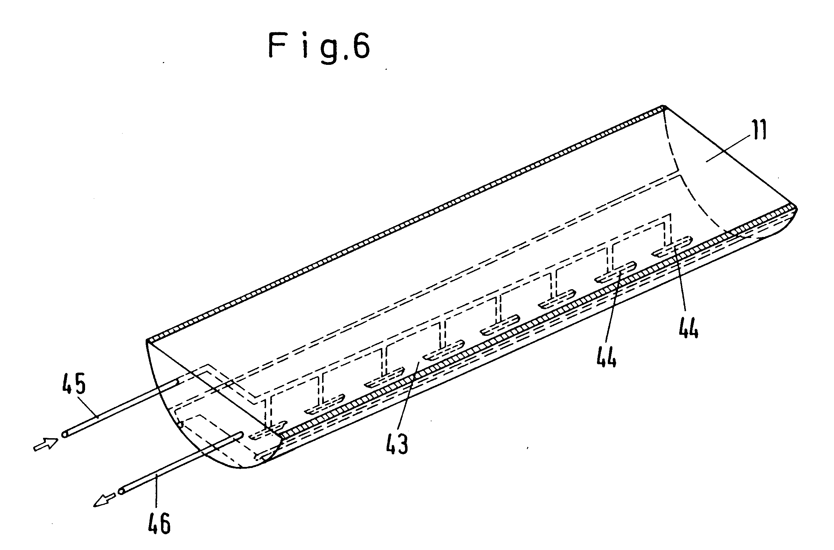

Wie es in den Fig. 5 und 6 noch dargestellt ist, sind die Laufplattformen 11 innerhalb der Laufröhren 10 über hydrostatische Lagerungen 43 gelagert, deren Lagerschuhen 44 über Druckleitungen 45 Öl zugeführt, welches über Abflußleitungen 46 wieder abfließen kann.

Wie es die voranstehende Beschreibung in Verbindung mit den Zeichnungen zeigt, ruht die gesamte Gewichtslast des Kalottenrahmens 4 und des Kugelgehäuses 1 auf den beiden Führungsringen 18,19 , welche in den Führungsnuten 20, 21 des Basisgestelles 5 abgestützt sind. Diese Führungsringe 18,19 werden rechtzeitig durch Öldruck angehoben und gleiten reibungsarm auf Ölfilmen. Die 360°-Drehung des Kalottenrahmens 4 wird mit dem Zahntrieb(23,24)bewirkt, wobei beidseits der verzahnten Laufschiene 23 Schienen angeordnet sind, auf welchen die Gewichtslast der erforderlichen E- Motoren ruht. Da die Gewichtslast des Kalottenrahmens 4 auf Ölfilmen abgestützt ist, ist hier keine Last des Kalottenrahmens 4 zu übertragen.

In gleicher Weise ist das Kugelgehäuse 1 auf den Druckpolstern abgestützt, welche mittels der Drucktaschen 33 erzeugt werden. Zur Neigung des Kugelgehäuses 1 um jeweils ca 75° zu beiden Seiten-von der vertikalen Stellung des Auges 7 aus betrachtetwerden daher keine großen Kräfte benötigt. Diese kann ein Elektromotor geringer Leistung aufbringen. Wenn das Teleskop abgeschaltet wird, ruhen alle Lasten auf der Kugelkalotte 47 und den Führungsringen 18,19, so daß das Kugelgehäuse 1 dann sicher arretiert ist.

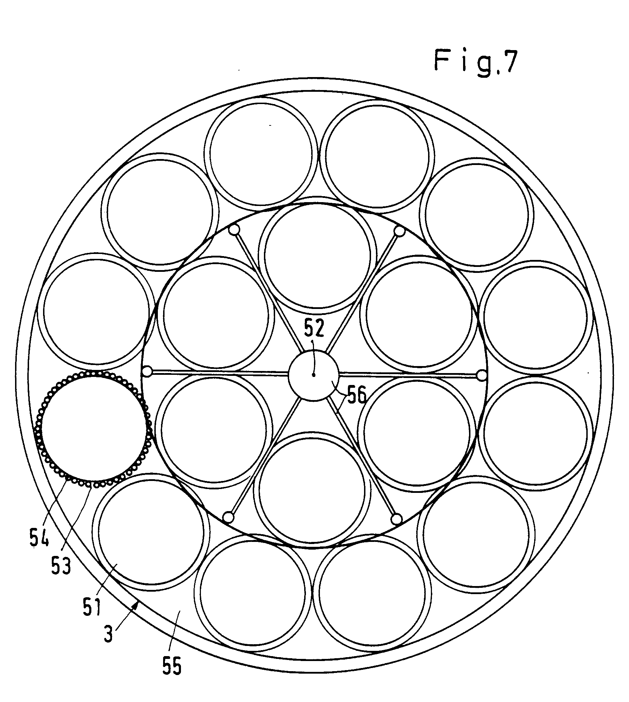

Die Fig. 7 zeigt eine Draufsicht auf den Primärspiegel 3 des Spiegelteleskopes, welcher aus 18 einstellbar gelagerten Spiegelsegmenten gebildet ist, von denen jedes aus einem kreisscheibenförmigen, runden Spiegelkörper 51 besteht. Diese sind auf konzentrisch zur Zentralachse 52 verlaufenden Kreisbahnen im Abstand voneinander derart gelagert, daß zwischen den einzelnen Spiegelkörpern 51 Freiflächen 53 für die Lagerung 54 der Spiegelkörper 51 und Freiflächen 55 für ein Halterungsgestänge 56 bzw. für dessen Abschattungflächen gebildet sind.

Jeder Spiegelkörper 51 besteht aus einem einstückigen Rundspiegel, dessen gesamte Fläche ohne die Aussparung einer zentralen Öffnung geschliffen ist. Derartige Rundspiegel -allerdings mit zentraler Öffnung- sind bezüglich ihrer Herstellung und Lagerung bekannt. So wird z.B. auf die Beschreibung des 3,5 m-Teleskops von Zeiss für das Max-Planck-Institut für Astronomie in "Zeiss Information" Heft 94, November 1982, hingewiesen. Ein derartiger Spiegelkörper umfaßt eine Spiegellagerung 54 mit radialer Zug-Druck- Entlastung, wozu Entlastungselemente am Umfang des Spiegelkörpers 51 vorhanden sind, für welche die Freiflächen 53 bestimmt sind.

Der Außendurchmesser des Primärspiegels 3 und damit der Tubusdurchmesser ergibt sich aus dem gewünschten effektiven Spiegeldurchmesser eines hypothetischen Monospiegels. Wenn die 18 einzelnen Spiegelkörper 51 einen Monospiegel von 20 m Durchmesser ersetzen sollen, so wird folgende Berechnung ausgeführt:

Fläche des Monospiegels von 20 m Durchmesser:

$$A^* = 100\pi = R^{*2} \cdot \pi$$

Zentralachsenspiegler mit 18 Spiegeln:
$18\, R^2 \pi = 100\pi$
$18\, R^2 = 100$
$r = 2,357\ m$
Jeder der 18 Spiegel hat somit einen Durchmesser von 4,71 m.

Durch die Anordnung der 18 Spiegelkörper 51 vom vorgenannten Durchmesser auf zwei zur Zentralachse 52 radialen Kreisbahnen, deren innere Kreisbahn sechs Spiegelkörper 51 und deren äußere Kreisbahn zwölf Spiegelkörper 51 aufweist, ergibt sich ein Gesamt- Außendurchmesser des Primärspiegels 3 und damit des Tubus von 26,946 m.

Der hypothetische Monospiegel von 20 m Durchmesser und damit einer Spiegelfläche von A* = 100$\pi$ wird somit durch 18 einzelne Spiegelkörper 51 gleicher Gesamtfläche ersetzt. Wegen der Spiegelhalterung erweitert sich der Durchmesser des Zentralachsenspieglers auf insgesamt 26,946 m. Damit sind die Freiräume 53,55 zwischen den 18 Spiegelkörpern 51 wie die entsprechenden Abschattungsflächen bei einem hypothetischen Monospiegel mit 26,946 m Durchmesser zu behandeln .

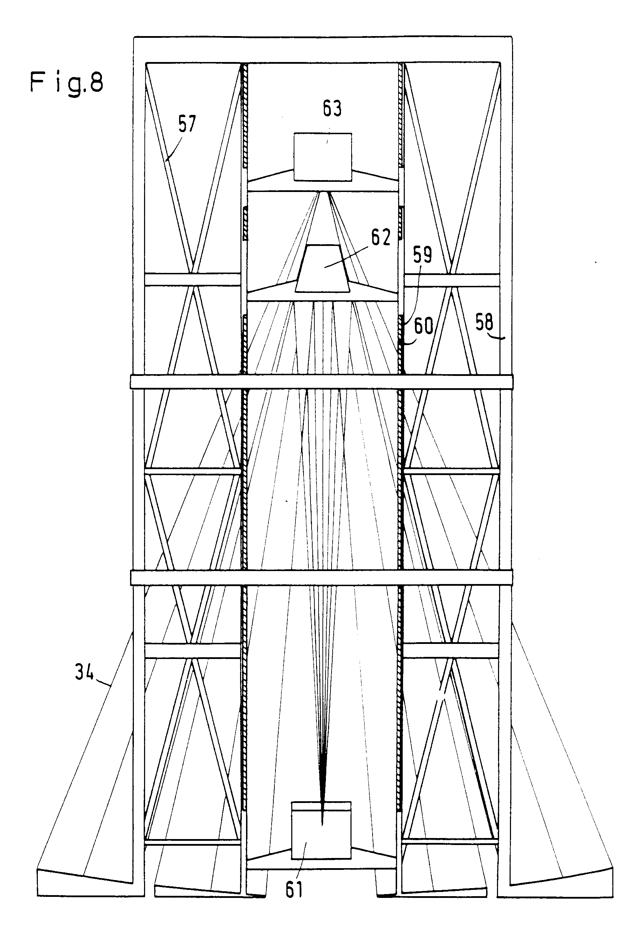

Das Halterungsgestänge 56 des in später noch näher beschriebener Weise parabolisch ausgebildeten Primärspiegels 3 ist in Fig. 8 in einem Prinzipschnitt längs der Zentralachse 52 dargestellt. Es umfaßt mittlere Halterrohre 58, die eine statische Tragekonstruktion Für den Tubus 2 bilden, und innere Führungsrohre 59, welche mit Führungsschienen 60 zur Führung von drei Beobachtungskabinen 61 bis 63 versehen sind. In der Anordnung gemäß Fig. 8 dient die untere Beobachtungskabine 61 für die Beobachtung im Cassegrain-Fokus mit sechs und mit achtzehn Spiegeln. Die mittlere Beobachtungskabine 62 dient zur Beobachtung im Cassegrain-Fokus mit sechs Spiegeln. Die obere Beobachtungskabine 63 dient zur Beobachtung im Primär-und Cassegrain - Fokus mit achtzehn Spiegeln. Die jeweiligen Strahlengänge 34 der von den achtzehn Spiegelkörpern 51 reflektierten Strahlen sind jeweils mit ihren Randstrahlen gezeigt. Die Fig. 8 zeigt die parabolische Ausbildung des Primärspiegels 3, welche später noch näher beschrieben werden wird, und ferner noch die gitterartigen Streben 57 zwischen den mittleren Halterohren 58 und den inneren Führungsrohren 59, welche später noch näher beschrieben werden.

Die Lagejustierung der achtzehn Spiegelkörper 51 erfolgt gemäß Fig. 9 mittels nicht näher dargestellter Laser-Impulsgeber 64, die am Rande eines jeden Spiegelkörpers 51 so angebracht sind, daß diese bei exakter Brennpunkteinstellung einem senkrecht darüber befindlichen, an einem Lochblech 65 mit Öffnungen 66 angebrachten, von einem Computer kontrollierten Empfänger 68 Impulse abgeben können. Eine eventuelle Abweichung der Lage des Spiegelkörpers 51 von der vorher bestimmten Lage wird vom Computer berechnet und sofort mittels der einstellbaren Lagerung 54 eines jeden Spiegelkörpers 51 ausgeglichen. Zweckmäßigerweise sind die Lagerungen 54 Öldrucklagerungen, so daß auch notwendige Lageänderungen per Öldruck ausgeführt werden können.

Die Lagerungen 54 eines jeden Spiegelkörpers 51 sind in den Figuren nicht näher dargestellt. Hierzu bieten sich bereits bekannte und erprobte Lagerungen an, welche z. B. von der Firma Carl Zeiss in Oberkochen/ Bundesrepublik Deutschland mehrfach angewandt wurden. Derartige Lagerungen haben radiale Unterstützungssysteme mit einer reinen Druck- und Zug Druck- Entlastung. Die einzelnen Stützpunkte sind in einem hydraulischen Unterstützungssystem verteilt. Die Spiegelentlastung erfolgt über hydraulische Doppelkammern.

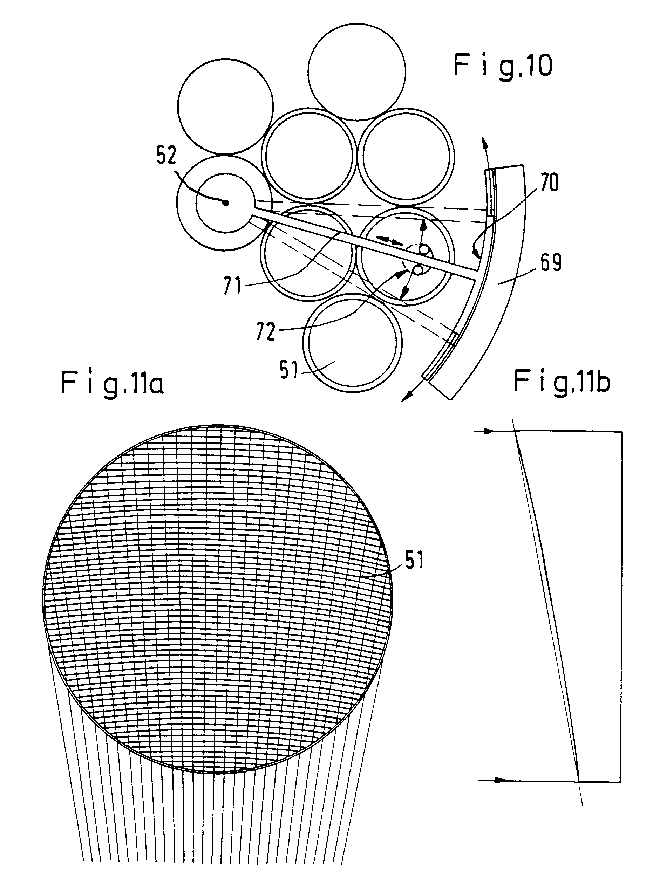

Das Schleifen des Primärspiegels 3 aus den im Ausführungsbeispiel 18 Spiegelkörpern 51 erfolgt gemäß Fig. 10 mittels eines konzentrisch um die Zentralachse 52 des Primärspiegels 3 herum gelegten Führungsblockes 69, an dessen Innenseite ein auf einem Ölfilm gelagerter Schlitten 70 gleitbar ist, welcher an einem Radialarm 71 geführt ist, welcher wiederum in der Zentralachse 52 gelagert ist. Entlang des Radialarmes 71 sind Polier-/ Schleifscheiben 72 radial verfahrbar, welche mit eigenen Drehantrieben ausgebildet sind. Mittels dieser Schleifanordnung lassen sich alle achtzehn Spiegelkörper 51 exakt schleifen und polieren, wodurch die gewünschte Paraboloid-Form erreicht wird. Die Oberflächenprüfung erfolgt in nicht näher dargestellter Weise mittels eines Nulltest-Laser-Inferometers, wobei selbstverständlich vorausgesetzt ist, daß die einzelnen Spiegelkörper 51 auf einen gemeinsamen Brennpunkt des Primärspiegels 3 justiert und gelagert sind. Diese Lagejustierung erfolgt in der Weise, welche in Fig. 8 dargestellt und zusammen mit dieser beschrieben ist.

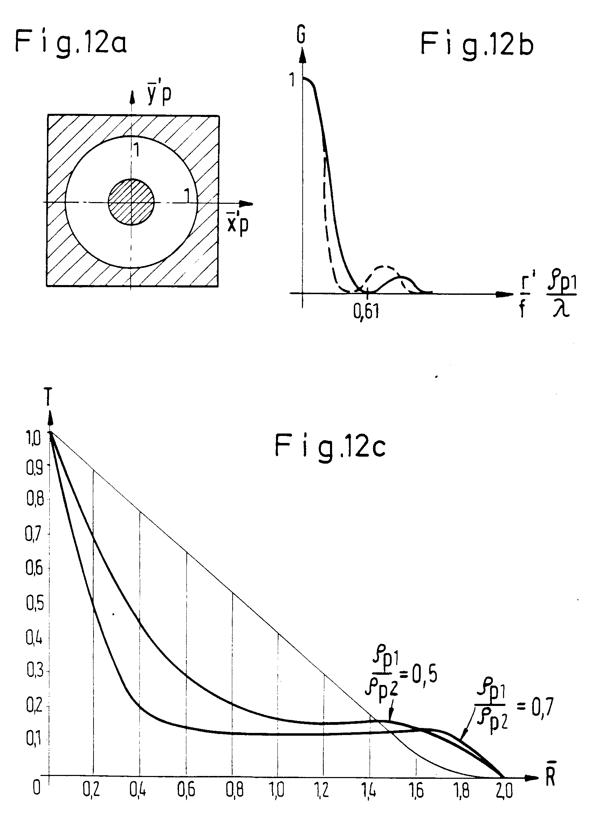

Die Form und der Schliff der einzelnen Spiegelkörper 51 sind aus Fig. 11 ersichtlich. Aufgrund der im Zusammenhang mit Fig.10 beschriebenen Schleifverfahren haben die einzelnen Spiegelkörper 51 keine rotationssymmetrische Form. Ihre Oberflächenkrümmung ist Bestandteil des hypothetischen Großspiegels in Form des Primärspiegels 3 mit Parabeloberfläche, wobei die Oberflächenkrümmung der Spiegelkörper 51 jeweils kreisförmige Ausschnitte davon darstellt. Hiermit wird ein exakter Brennpunkt in der Zentralachse 52 erzielt. Die äußeren zwölf Spiegelkörper können zur Gewichtseinsparung in ihrer äußeren Randüberhöhung minimiert werden, wie es in Fig.11b dargestellt ist.

Die Fig. 12 zeigt mit ihren einzelnen Teilfiguren Auswirkungen der Zentralabschattung, d.h. des Zentrums des Primärspiegels 3, in welchem Zentrum selbst kein Spiegelkörper 51 angeordnet ist, wie es die Figuren 7 und 9 zeigen. Der dargestellte und beschriebene Zentralachsenspiegler verbessert das Auflösungsvermögen und setzt gleichzeitig den Kontrast bei mittleren Ortsfrequenzen herab ( Fig.12a ). Die Punktbildfunktion wird bei der erfindungsgemäßen Zentralabschattung ( gestrichelte Linie in Fig.12b ) gegenüber bekannten Punktbildfunktionen ( Fig.12b ) verbessert. Schließlich wird auch die Modulationsübertragungsfunktion bei der erfindungsgemäßen Zentralabschattung gemäß Fig.

12c verbessert.

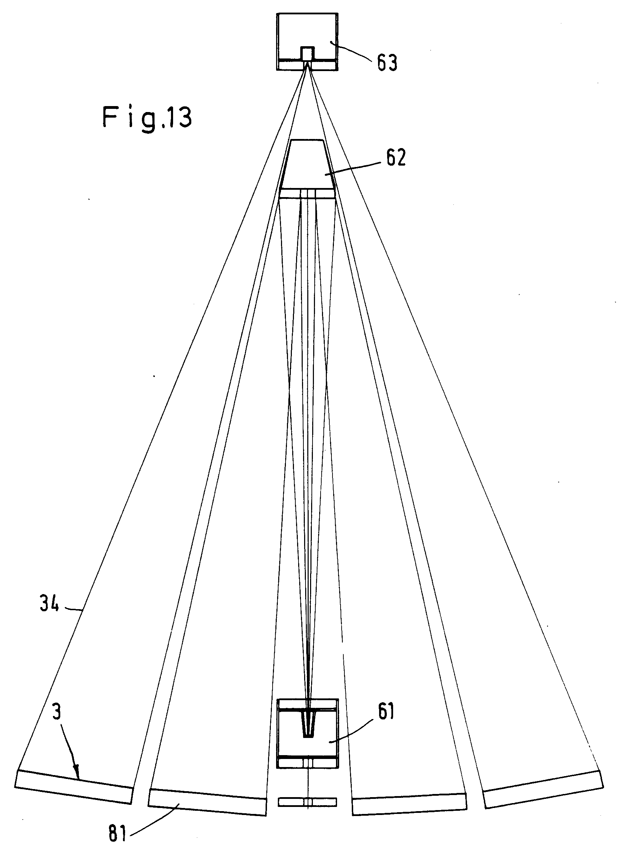

Die Figuren 13 bis 16 zeigen Prinzipdarstellungen der Strahlengänge bei verschiedenen Beobachtungsarten. So zeigt Fig. 13 einen Primärfokus mit zwölf Spiegelkörpern bei gleichzeitigem Cassegrain -Fokus mit sechs Spiegeln. Die Stellung der Beobachtungskabinen 61 bis 63 entspricht dabei der Stellung gemäß Fig. 8 .

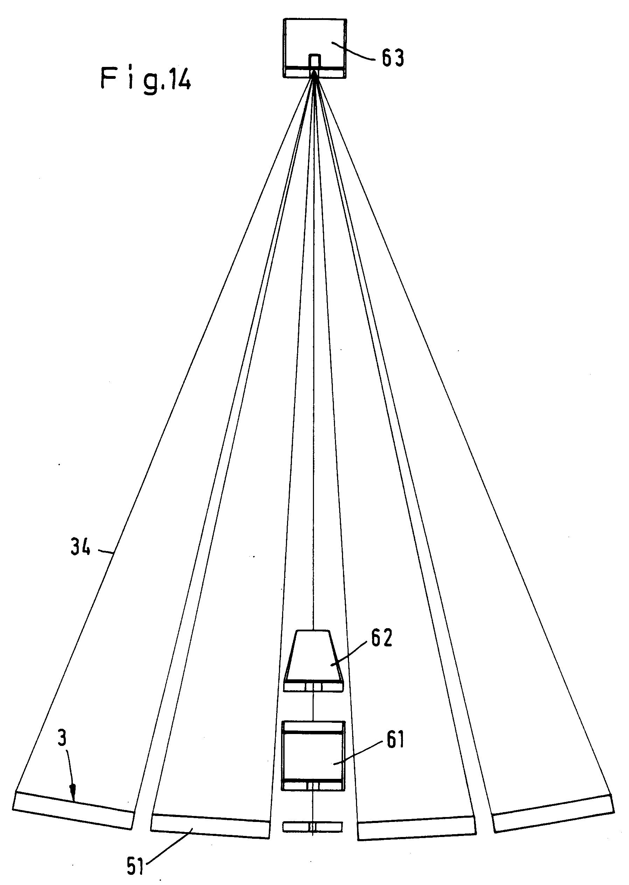

Die Fig. 14 zeigt den Primärfokus mit achtzehn Spiegeln in der oberen Beobachtungskabine 63 , wobei die beiden anderen Beobachtungskabinen 61 und 62 nach unten bewegt und unbenutzt sind.

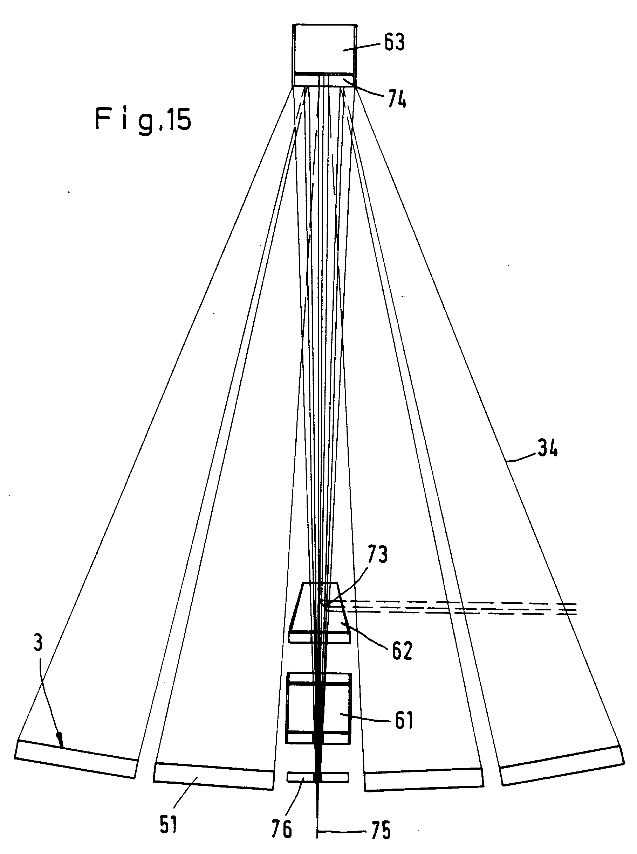

Die Fig. 15 zeigt den Cassegrain - Fokus mit achtzehn Spiegeln mit einer Ausblendemöglichkeit für den Coudé- Fokus, welche in der mittleren Beobachtungskabine 62 durch einen Sekundärspiegel 73 vorgesehen ist. Die obere Beobachtungskabine 63 trägt an ihrer Unterseite einen Sekundärspiegel 74. Das Okular 75 für den Cassegrain-Fokus ist unterhalb einer Lochblende 76 dargestellt.

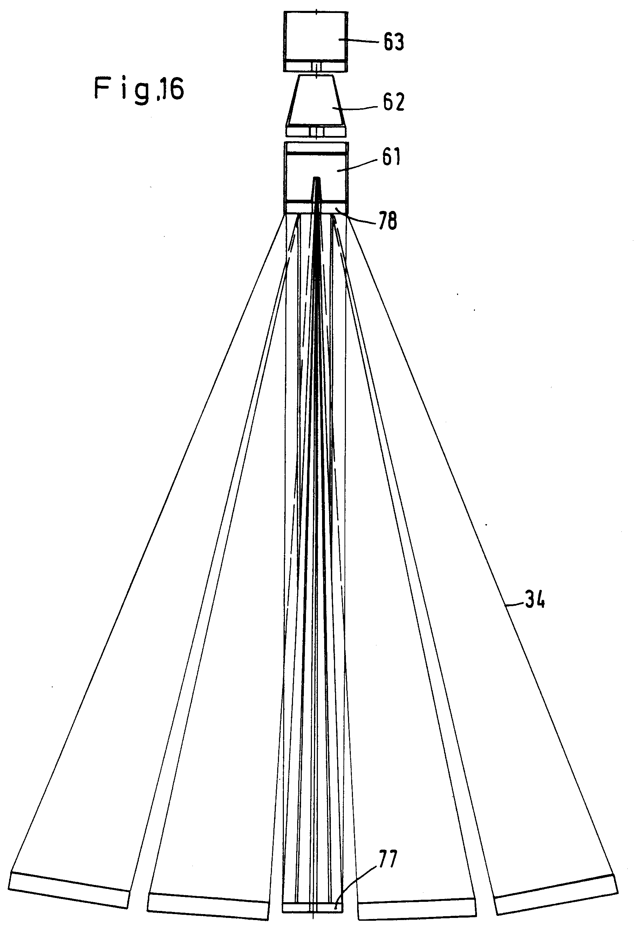

Die Fig. 16 zeigt den Cassegrain-Fokus mit achtzehn Spiegeln und drei-facher Reflektion mittels zweier Spiegel 77,78, die auf der Lochblende 76 bzw. unterhalb der unteren Beobachtungskabine 61 angebracht sind. Die beiden oberen Beobachtungskabinen 62 und 63 sind inaktiv.

In den Fig. 13 bis 16 sind jeweils die Randstrahlen 34 der jeweiligen Spiegelkörper 51 und Sekundärspiegel 73,74 und 77,78 dargestellt.

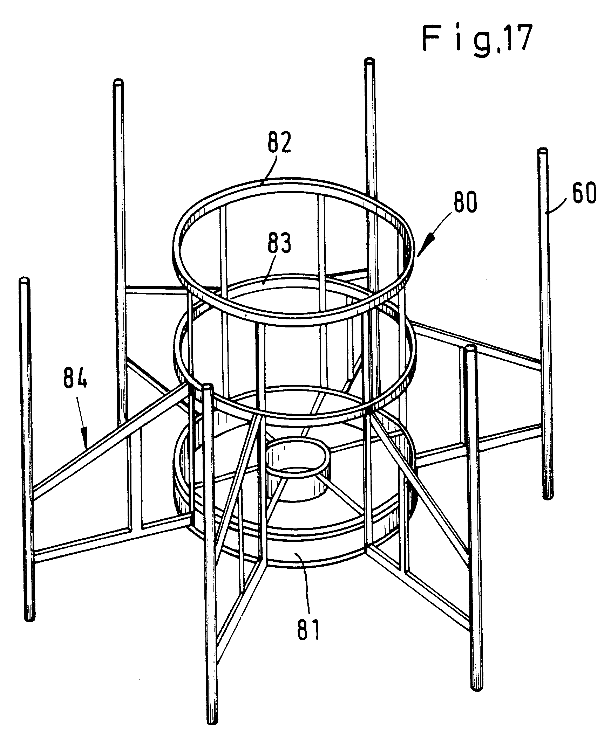

In Fig. 17 ist das Rahmengestell 80 für eine der Beobachtungskabinen 61 bis 63 dargestellt, welches aus einer die Sekundär- bzw. Umlenkspiegel 73,74 bzw. 77,78 aufnehmenden Plattform 81, zwei in einem Abstand oberhalb der Plattform 81 angebrachten Stützringen 82,83, sowie Radialstreben 84 besteht, welche in den inneren Führungsbzw. Laufschienen 60 vertikal bewegbar geführt sind.

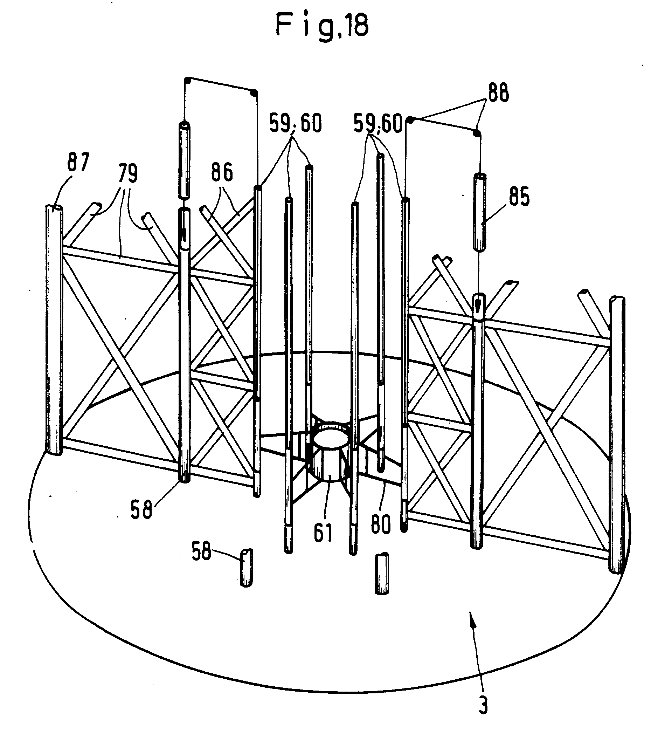

Die Fig. 18 zeigt in einer teilweise geschnittenen Perspektivdarstellung, das innerhalb der Zentralachse 52 des Primärspiegels 3 geführte Rahmengestell 80 mit den Führungs-/ Laufschienen 60 der inneren Führungsrohre 59. Über die Gitterstreben 86 als statische Verbindungsträger sind die inneren Führungsrohe 59 gegenüber den mittleren Halterrohren 58 abgestützt, in welchen Ballastkörper 85 zum Gewichtsausgleich der Rahmengestelle 80 der drei Beobachtungskabinen 61 bis 63 geführt sind. Über ein weiteres Gitterwerk 79 werden die mittleren Halterrohre 58 noch durch äußere Halterrohre 87 abgestützt.

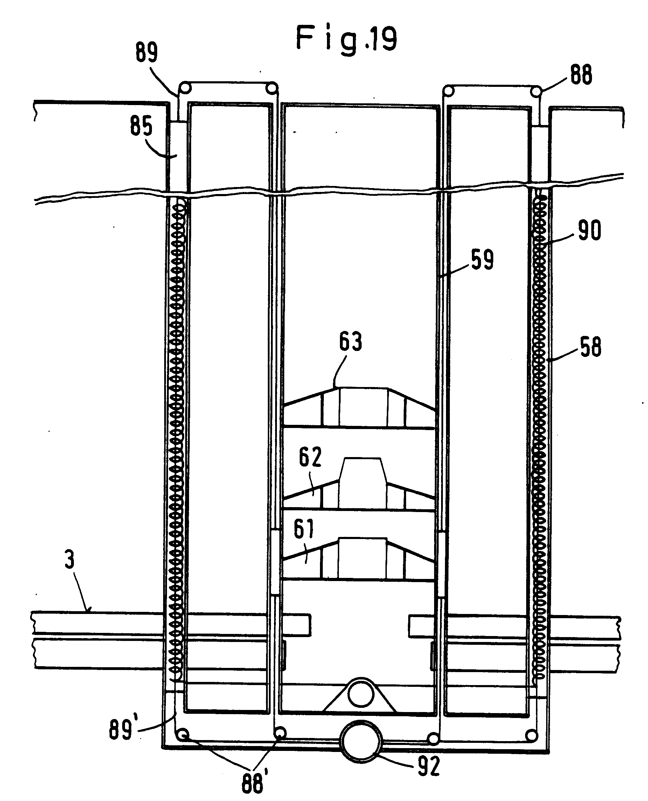

Die Fig. 19 zeigt in vereinfachter Darstellung einen Vertikalschnitt durch das Halterungsgestänge 56, wobei die über Umlenkrollen 88 geführten Tragseile 89 dargestellt sind, welche die Ballastkörper 85 mit den einzelnen Beobachtungskabinen 61 bis 63 verbinden. Über untere Umlenkrollen 88' sind Führungsseile 89' für die Ballastkörper 85 geführt.

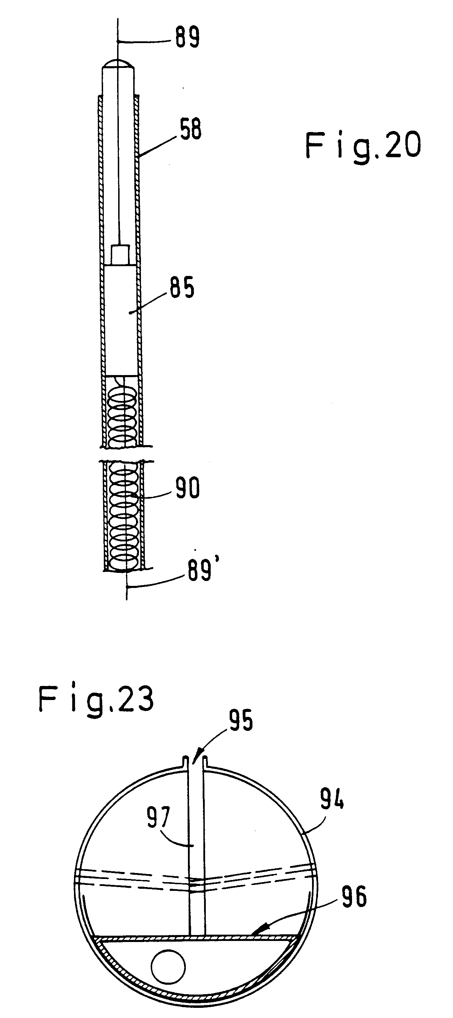

Gemäß Fig. 20 sind die in den mittleren Halterohren 58 geführten Ballastkörper 85 als Hohlkörper ausgebildet und mit Öldruckschläuchen 90 und über diese mit einer Ölpumpe 91 verbunden, so daß das Gewicht der Ballastkörper 85 je nach Belastung der einzelnen Beobachtungskabinen 61 bis 63 zwecks Gewichtsanpassung verändert werden kann. In nicht näher dargestellter Weise erfolgt die Steuerung der Bewegung der Beobachtungskabinen 61 bis 63 mittels eines Zentralantriebes 92.

Die drei Beobachtungskabinen 61 bis 63 können somit längs der Zentralachse 52 bewegt werden, wozu die Beobachtungskabinen 61 bis 63 in den sechs Lauf-/Führungsschienen 60 gelagert sind. Diese Laufschienen 60 sind reibungsarm in den Führungsrohren 59 gelagert. Jede Beobachtungskabine 61 bis 63 ist an zwei gegenüberliegenden Lauf-/Führungsschienen 60 aufgehängt. Die beiden voneinander unabhängig arbeitenden Aufhängemechanismen einer jeden Beobachtungskabine 61 bis 63 sind in den zugehörigen mittleren Halterrohren 58 so geführt, daß die jeder Beobachtungskabine 61 bis 63 zugeordneten zwei Ballastkörper 85 das Gewicht der Beobachtungskabine 61 bis 63 aufheben. Somit schwebt jede Beobachtungskabine 61 bis 63 bei vertikal gerichtetem Tubus bzw. Halterungsgestänge 56 in der Laufschienenlagerung. Die Nachführung der Beobachtungskabinen 61 bis 63 für eine exakte Brennpunkteinstellung wird dadurch stark erleichtert.

Da insgesamt sechs mittlere Halterrohre 58 mit sechs Führungsrohren 59 vorgesehen sind, können die drei Beobachtungskabinen 61 bis 63 unabhängig voneinander bewegt werden. Bei einem Durchmesser von etwa 2,4 m bietet jede Beobachtungskabine 61 bis 63 ausreichend Platz, um bis zu vier beobachtende Astronomen aufzunehmen. Die dabei auftretende unterschiedliche Belastung kann dadurch ausgeglichen werden, daß in die Ballastkörper 85 solange Öl eingefüllt wird, bis der theoretische Schwebezustand der Beobachtungskabinen 61 bis 63 erreicht ist. Die Exaktsteuerung kann dann mittels nicht näher dargestellter Lastprüfgeräte automatisch erfolgen.

Die Bewegung der Tragseile 89 und Führungsseile 89' als Zugseile erfolgt gemäß Fig. 19 in einem geschlossenen System, wobei der Zentralantrieb 92 einen nicht näher dargestellten Elektromotor aufweist, der sich unter der Ebene des Primärspiegels 3 befindet. Die Tragseile 89 sind über die Ballastkörper 85 mit den Führungsseilen 89' verbunden und greifen innerhalb der Führungsrohre 59 jeweils an der zugehörigen Beobachtungskabine 61 bis 63 bzw. an den diesen zugeordneten Führungsschienen 60 von oben bzw. von unten an. Somit erfolgt eine zentrale Steuerung der Beobachtungskabinen 61 bis 63 vom Zentralantrieb 92 aus.

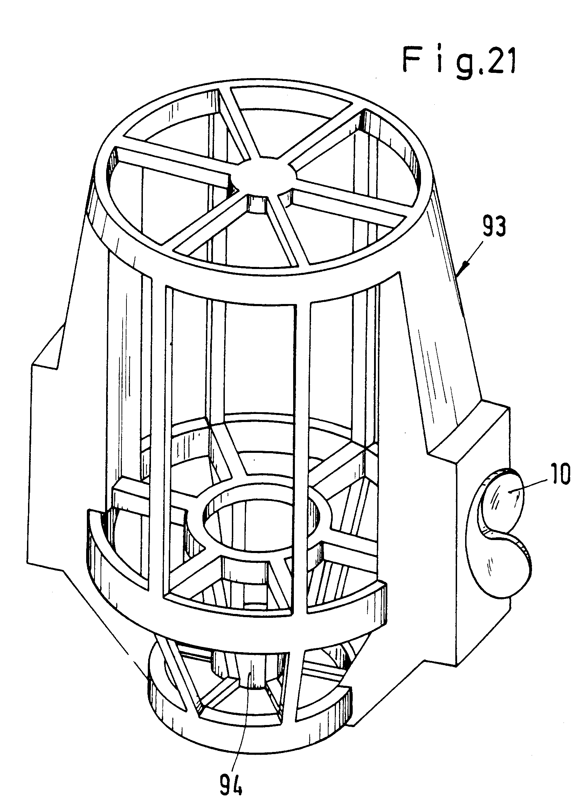

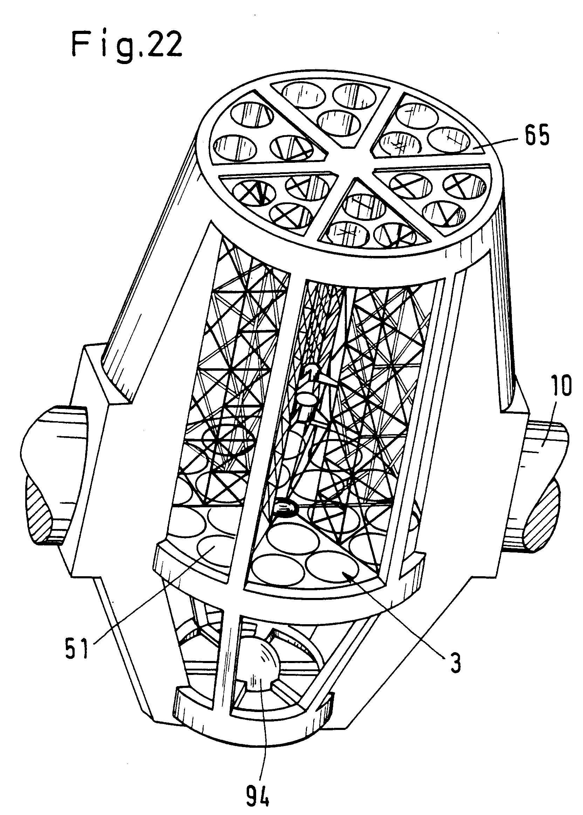

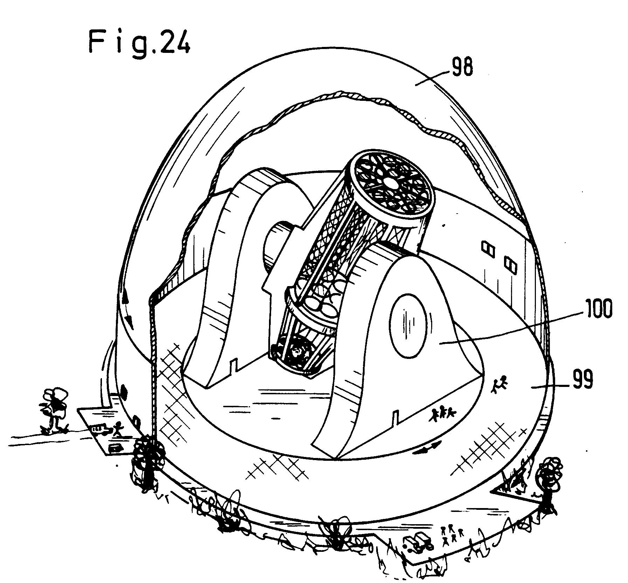

Die Figuren 21 und 22 zeigen in Perspektivdarstellungen den Rahmen 93 des Tubus, in welchen gemäß Fig. 22 der Primärspiegel 3, das auf diesem befindliche Halterungsgestänge 56 mit Beobachtungskabinen 61 bis 63 und das den Tubus abschließende Lochblech 65 ein bzw. aufgesetzt sind. Auf der Unterseite des Tubus ist eine kugelförmige Beobachtungskabine 94 für den Coudé-Fokus mit einer kreisrunden Lichteintrittsluke 95 angeordnet, welche in Fig. 23 noch näher dargestellt ist. Die Beobachtungskabine 94 ist starr mit dem Tubus verbunden. Auf einem Ölfilm und daher äußerst reibungsarm gelagert ist eine innere Plattform 96, welche in jeder Stellung des Tubus horizontal ausgerichtet ist. Da die Nachführung des Tubus relativ langsam vor sich geht, sind Schwingungserscheinungen so gut wie ausgeschlossen.

Luftturbulenzen in Folge Frischluftzufuhr sind deshalb ohne Belang, weil konstruktive Vorkehrungen, z.B. eine Ummantelung des einfallenden Lichtbündels bis zu den Meßgeräten getroffen werden können. Der Zugang zur kugelförmigen Beobachtungskabine 94 erfolgt über die Eintrittsluke 95 für das Lichtbündel. Leitungen zur Energieversorgung werden durch parallel zur Lichtbündelummantelung 97 hereingeführte, nicht näher dargestellte Rohrleitungen gewährleistet. Der Durchmesser der kreisrunden Plattform 96 der Beobachtungskugel 94 beträgt etwa 8 m. Unterhalb der Plattform 96 ist somit innerhalb der kugelförmigen Gehäusewandung ausreichend Platz für Öldruck- und Arretierungseinrichtungen.

Die Fig. 23 zeigt das fertige Spiegelteleskop in alternativer Ausführungsform, dessen halbkugelförmiges Dach 98 sich zusammen mit der kreisrunden Bodenplatte 99 dreht. Dies gewährleistet eine sehr exakte Nachführung. Der Zugang zum Spiegelteleskop erfolgt über die Aufhängestützen 100. Die Gesamthöhe der Kuppel beträgt ca. 50 m.

Es wird abschließend darauf hingewiesen, daß die Anordnung der Spiegelkörper 51 auf konzentrisch zur Zentralachse 52 des Tubus 2 verlaufenden Kreisbahnen im Prinzip nur für zwei konzentrische Bahnen von Spiegelkörpern 51 gilt. Bei mehr als zwei Kreisbahnen liegen die Mittelpunkte der Spiegelkörper 51 genaugenommen auf den Seitenlinien regelmäßiger Sechsecke, sofern eine dichte Anordnung der Spiegelkörper 51 gewünscht wird.

**Patentansprüche**

1. Spiegelteleskop bestehend aus einem Kugelgehäuse (1), einem Kalottenrahmen (4) zur Lagerung des Kugelgehäusess (1) und einer hydrodynamischen Gleitlagerung (31 bis 33) für das Kugelgehäuse (1)
dadurch gekennzeichnet,

daß im Kugelgehäuse (1) ein Tubus (2) angeordnet ist,
daß das Kugelgehäuse (1) Achsschenkel aufweist, die in Lageraugen (9) des Kalottenrahmens (4) gelagert sind und die zur Drehung des Kugelgehäuses (1) um eine horizontale Achse (8) dienen,
daß die Achsschenkel aus begehbaren Laufröhren (10) gebildet sind,
daß die Drehung des Kugelgehäuses (1) um die horizontale Achse (8) über die Laufröhren (10) erfolgt und
daß das Kugelgehäuse (1) und der Kalottenrahmen (4) mittels der hydrodynamischen Gleitlagerung (31 bis 33) um eine vertikale Achse (48) drehbar in einem Basisgestell (5) gelagert sind.

2. Spiegelteleskop nach Anspruch 1,
dadurch gekennzeichnet,
daß die Laufröhren (10) am Kugelgehäuse (1) fest angebracht sind,
daß in den Laufröhren (10) am Kalottenrahmen (4) festangebrachte, in den Laufröhren (10) gleitbare Laufplatten (11) angeordnet sind und
daß sich die Antriebselemente (12) zur Drehung des Kugelgehäuses (1) um die Laufröhren (10) herum erstrecken.

3. Spiegelteleskop nach Anspruch 1 oder 2,
dadurch gekennzeichnet,
daß die Laufröhren (10) zu innerhalb des Kugelgehäuses (1) angeordneten Liften (36, 37) geführt sind, deren Liftinnenwandung (40) kugelförmig ausgebildet und innerhalb der Liftaußenwandung (39) derart drehbar gelagert ist,
daß die Standplattform (41) des Liftes (36, 37) in jeder Drehlage des Kugelgehäuses (1) in der horizontalen Ebene der Laufplattform (11) einer jeden Laufröhre (10) angeordnet ist.

4. Spiegelteleskop nach einem der Ansprüch 1 bis 3,
dadurch gekennzeichnet,
daß die Laufplattform (11) innerhalb einer jeden Laufröhre (10) auf hydrostatischen Gleitlagern (44) gelagert ist.

5. Spiegelteleskop nach einem der Ansprüche 1 bis 4,
dadurch gekennzeichnet,
daß das Kugelgehäuse (1) aus Kohlefasermaterial gebildet ist.

6. Spiegelteleskop nach einem der Ansprüche 1 bis 5,
mit einem in dem Tubus angeordneten Primärspiegel (3) aus einzelnen, auf konzentrisch zur Zentralachse (52) des Tubus (2) verlaufenden Kreisbahnen gelagerten, einstellbaren Spiegelsegmenten, mit in der Zentralachse (52) an einem Halterunsgestänge (56) verfahrbaren Sekundär- bzw. Umlenkspiegeln (73, 74 bzw. 77, 78) mit Beobachtungskabinen (61, 62, 63) für die verschiedenen Foci, wobei die Spiegelsegmente aus kreisscheibenförmigen Spiegelkörpern (51) gebildet sind, deren Oberflächen zur Ausbildung der erforderlichen Paraboloidform der Primärspiegels (3) gemeinsam geschliffen sind, und wobei zwischen den einzelen Spiegelkörpern (51) Freiflächen (53, 55) für die Lagerungen (54) der Spiegelkörper (51) und für das Halterungsgestänge (56) bzw. für dessen Abschattungsflächen gebildet sind.

7. Spiegelteleskop nach Anspruch 6,
dadurch gekennzeichnet,
daß die Beobachtungskabinen (61, 62, 63) mit den Sekundär- bzw. Umlenkspiegeln (73, 74, 77, 78) versehen und frei längs der Zentralachse (52) des Tubus (2) bewegbar gelagert sind.

8. Spiegelteleskop nach Anspruch 6 oder 7,
dadurch gekennzeichnet,
daß das eingangsseitige Halterungsgestänge (56) des Tubus (2) aus einem Lochblech (65) mit Öffnungen (66) gebildet ist, deren Anordnung und Durchmesser der Anordnung und dem Durchmesser der Spiegelkörper (51) des Primärspiegels (3) entspricht.

9. Spiegelteleskop nach einem der Ansprüche 6 bis 8,
dadurch gekennzeichnet,
daß das Halterungsgestänge (56) eine statische Tragekonstruktion für den Tubus (2) bildende Halterohre (58) und mit Führungsschienen (60) zur Führung von drei Beobachtungskabinen (61 bis 63) versehene innere Führungsrohre (59) umfaßt.

10. Spiegelteleskop nach Anspruch 9,
dadurch gekennzeichnet,
daß die Beobachtungskabinen (61 bis 63) mit den Sekundär- bzw. Umlenkspiegeln (73, 74; 77, 78) versehen sind und frei längs der Zentralachse des Tubus bewegbar sind.

11. Spiegelteleskop nach einem der Ansprüche 6 bis 10,
dadurch gekennzeichnet,
daß die Lagerungen (54) eines jeden Spiegelkörpers (51) einstellbar ausgebildet sind.

12. Spiegelteleskop nach Anspruch 11,
dadurch gekennzeichnet,
daß die Lagejustierung eines jeden Spiegelkörpers (51) mittels Lage-Impulsgebern (67) erfolgt, die am Rande eines jeden Spiegelkörpers (51) angebracht sind und an je einen senkrecht darüber befindlichen, am Lochblech (66) angebrachten, von einem Computer kontrollierten Empfänger (68) Impulse abgeben.

13. Spiegelteleskop nach einem der vorangegangenen Ansprüche,
dadurch gekennzeichnet,
daß für jede Beobachtungskabine (61 bis 63) ein Rahmengestell (80) vorgesehen ist, das aus einer die Sekundär- bzw. Umlenkspiegel (73, 74; 77, 78) aufnehmenden Plattform (81), zwei in einem Abstand oberhalb der Plattform (81) angebrachten Stützringen (82, 83) und Radialstreben (84) besteht, die in den inneren Führungs- bzw. Laufschienen (60) vertikal bewegbar geführt sind.

**Claims**

1. A reflector telescope consisting of a spherical casing (1), an outer framework (4) for the mounting of the spherical casing (1) and a hydrodynamic sliding bearing (31 to 33) for the spherical casing (1) characterised in that in the spherical casing (1) a tube (2) is arranged, the spherical casing (1) has axle journals which are mounted in bearing eyes (9) of the outer framework (4) and which serve for the rotation of the spherical casing (1) about a horizontal axis (8), the axle journals are formed from walkway tubes (10) which can be walked along, the rotation of the spherical casing (1) about the horizontal axis (8) takes place via the walkway tubes (10) and the spherical casing (1) and the outer framework (4) are mounted by means of the hydrodynamic sliding bearing (31 to 33) so as to be rotatable about a vertical axis (48) in a base stand (5).

2. A reflector telescope according to claim 1, characterised in that the walkway tubes (10) are fixedly arranged on the spherical casing (1), walkway plates (11) are arranged which are slidable in the walkway tubes (10) and are arranged in the walkway tubes (10) fixed on the outer framework (4) and the drive elements (12) for turning the spherical casing (1) extend around the walkway tubes (10).

3. A reflector telescope according to claim 1 or 2, characterised in that lifts (36, 37) arranged inside the spherical casing (1) lead to the walkway tube (10), the lift inner wall (40) of which is constructed so as to be spherical and is rotatably mounted inside the lift outer wall (39) such that the standing platform (41) of the lift (36, 37) in every rotational position of the spherical casing (1) is arranged in the horizontal plane of the walkway platform (11) of each walkway tube (10).

4. A reflector telescope according to one of claims 1 to 3, characterised in that the walkway platform (11) is mounted inside each walkway tube (10) on hydrostatic sliding bearings (44).

5. A reflector telescope according to one of claims 1 to 4 characterised in that the spherical casing (1) is formed from carbon fibre material.

6. A reflector telescope according to one of claims 1 to 5, with a primary mirror (3), arranged in the tube, of individual adjustable mirror segments, mounted on circular paths running concentrically to the central axis (52) of the tube (2), with secondary or deflecting mirrors (73, 74 or 77, 78) movable on the central axis (52) on a mounting rod system (56), with observation cabins (61, 62, 63) for the various foci, in which the mirror segments are formed from mirror bodies (51) in the form of circular discs, the surfaces of which are ground jointly for the formation of the necessary paraboloid form of the primary mirror (3), and in which between the individual mirror bodies (51) free faces (53, 55) are formed for the mountings (54) of the mirror bodies (51) and for the mounting rod system (56) or for its shading faces.

7. A reflector telescope according to claim 6, characterised in that the observation cabins (61, 62, 63) are provided with the secondary or deflecting mirrors (73, 74, 77, 78) and are mounted so as to be movable freely along the central axis (52) of the tube (2).

8. A reflector telescope according to claim 6 or 7, characterised in that the mounting rod system (56) of the tube (2) on the inlet side is formed from a perforated metal sheet (65) with openings (66), the arrangement and diameter of which correspond to the arrangement and the diameter of the mirror bodies (51) of the primary mirror (3).

9. A reflector telescope according to one of claims 6 to 8, characterised in that the mounting rod system (56) comprises holding tubes (58) forming a static carrier construction for the tube (2) and inner guide tubes (59) provided with guide rails (60) to guide three observation cabins (61 to 63).

10. A reflector telescope according to claim 9 characterised in that the observation cabins (61 to 63) are provided with the secondary or deflecting mirrors (73, 74; 77, 78) and are movable freely along the central axis of the tube.

11. A reflector telescope according to one of claims 6 to 10 characterised in that the bearings (54) of each mirror body (51) are constructed so as to be adjustable.

12. A reflector telescope according to claim 11, characterised in that the positional adjustment of each mirror body (51) takes place by means of position impulse transmitters (67), which are arranged on the edge of each mirror body (51) and emit impulses in each case to a computer-controlled receiver (68) situated vertically thereabove, arranged on the perforated metal sheet (66).

13. A reflector telescope according to one of the preceding claims, characterised in that for each observation cabin (61 to 63) a frame stand (80) is provided, which consists of a platform (81) holding the secondary or deflecting mirrors (73, 74; 77,78), two support rings (82, 83) arranged at a distance above the platform (81), and radial struts (84) which are guided so as to be movable vertically in the inner guide- or runner rails (60).

**Revendications**

1. Télescope à réflecteur se composant d'une carcasse sphérique (1), d'un cadre concave (4) pour le logement de la carcasse sphérique (1) et d'un palier à glissement hydrodynamique (31 à 33) pour la carcasse sphérique (1), caractérisé en ce
qu'un tube (2) est disposé dans la carcasse sphérique (1),
que la carcasse sphérique (1) présente des embranchements d'axe, qui sont logés dans des yeux de palier (9) du cadre concave (4) et qui servent à faire tourner la carcasse sphérique (1) autour d'un axe horizontal (8),
que les embranchements d'axe sont constitués par des conduits de passage praticables (10),
que la rotation de la carcasse sphérique (1) autour de l'axe horizontal (8) s'effectue par l'intermédiaire des conduits de passage (10) et que la carcasse sphérique (1) et le cadre concave (4) sont logés de manière rotative autour d'un axe vertical (48) dans un bâti de base (5) au moyen des paliers à glissement hydrodynamique (31 à 33).

2. Télescope à réflecteur selon la revendication 1, caractérisé en ce que les conduits de passage (10) sont montés fixement sur la carcasse sphérique (1), que dans les conduits de passage (10) sont disposées des dalles de circulation (11) glissant dans les conduits de passage (10) et appliquées fixement contre le cadre concave (4) et que les éléments d'entraînement (12) s'étendent tout autour des conduits de passage (10) pour la rotation de la carcasse sphérique (1).

3. Télescope à réflecteur selon la revendication 1 ou 2, caractérisé en ce que les conduits de passage (10) sont amenés à des ascenseurs (36, 37) disposés à l'intérieur de la carcasse sphérique (1), ascenseurs dont la paroi interne (40) est de forme sphérique et est logée à l'intérieur de la paroi externe (39) de manière rotative de sorte que la plate-forme (41) de l'ascenseur (36, 37) est disposée, dans chaque position de rotation de la carcasse sphérique (1), dans le plan horizontal de la plate-forme de circulation (11) de chaque conduit de passage (10).

4. Télescope à réflecteur selon l'une des revendications 1 à 3, caractérisé en ce que la plate-forme de circulation (11) est logée à l'intérieur de chaque conduit de passage (10) sur des paliers à glissement (44) hydrostatiques.

5. Télescope à réflecteur selon l'une des revendications 1 à 4, caractérisé en ce que la carcasse sphérique (1) est réalisée à partir de matériau de fibres de carbone.

6. Télescope à réflecteur selon l'une des revendications 1 à 5, comprenant un miroir primaire (3) disposé dans le tube, se composant de segments de miroir séparés, réglables, placés sur des orbites circulaires s'étendant de manière concentrique par rapport à l'axe central (52) du tube (2), des miroirs de déviation resp. secondaires (73, 74, resp. 77, 78) mobiles le long d'un système de fixation à tiges (56) dans l'axe central (52), des cabines d'observation (61, 62, 63) pour les différents foyers, les segments de miroir étant constitués à partir de corps de miroir (51) en forme de disque circulaire, dont les surfaces sont polies ensemble pour réaliser la forme paraboloïdale nécessaire du miroir primaire (3) et, entre les différents corps de miroirs (51), des surfaces libres (53, 55) étant formées pour les paliers (54) des corps de miroirs (51) et pour le système de fixation à tiges (56) resp. pour ses surfaces d'ombre.

7. Télescope à réflecteur selon la revendication 6, caractérisé en ce que les cabines d'observation (61, 62, 63) sont équipées des miroirs de déviation resp. secondaires (73, 74, 77, 78) et sont logées de manière mobile librement le long de l'axe central (52) du tube (2).

8. Télescope à réflecteur selon la revendication 6 ou 7, caractérisé en ce que le système de fixation à tiges (56) du tube (2), du coté de l'entrée est constitué par une tôle perforée (65) avec des orifices (66), dont la disposition et le diamètre correspondent à la disposition et au diamètre des corps de miroir (51) du miroir primaire (3).

9. Télescope à réflecteur selon l'une des revendications 6 à 8, caractérisé en ce que le système de fixation à tiges (56) comprend une construction porteuse statique pour les tuyaux support (58) formant le tube (2) et des tuyaux de guidage (59) internes munis de rails de guidage (60) pour le guidage de trois cabines d'observation (61 à 63).

10. Télescope à réflecteur selon la revendication 9, caractérisé en ce que les cabines d'observation (61 à 63) sont munies des miroirs de déviation resp. secondaires (73, 74, 77, 78) et sont mobiles librement le long de l'axe central du tube.

11. Télescope à réflecteur selon l'une des revendications 6 à 10, caractérisé en ce que les paliers (54) de chaque corps de miroirs (51) sont conçus pour être réglables

12. Télescope à réflecteur selon la revendication 11, caractérisé en ce que l'ajustement de position de chaque corps de miroir (51) s'effectue au moyen de générateurs d'impulsions de position (64) qui sont mis en place au bord de chaque corps de miroir (51) et délivrent des impulsions à un récepteur correspondant (68) qui est situé au-dessus perpendiculairement qui est commandé par un ordinateur et qui est placé sur la plaque perforée (65).

13. Télescope à réflecteur selon l'une des revendications précédentes,
caractérisé en ce que
pour chaque cabine d'observation (61 à 63), il est prévu une armature (80) qui se compose d'une plate-forme (81) recevant les miroir de déviation resp. secondaires (73, 74, 77, 78), de deux couronnes d'appui (82, 83) disposées à distance au-dessus de la plate-forme (81) et de jambes de force radiales (84) qui sont guidées verticalement dans les rails internes de guidage resp. de roulement (60).

Fig.1

Fig.2

Fig.3

EP 0 305 369 B1

# Fig.4

Fig.5

Fig.6

Fig.7

Fig.8

Fig.9

Fig.10

Fig.11a

Fig.11b

Fig.12a

Fig.12b

Fig.12c

Fig.13

Fig.14

Fig.15

Fig.16

Fig.17

Fig.18

Fig.19

Fig.20

89

58

85

90

89'

Fig.23

95

97

94

96

Fig.21

93

10

94

# Fig.22

Fig.24